# EUROPÄISCHE PATENTSCHRIFT

(11) **EP 1 530 035 B1**
(45) Veröffentlichungstag und Bekanntmachung des Hinweises auf die Patenterteilung: **31.12.2008**
(21) Anmeldenummer: 03104106.4
(22) Anmeldetag: 06.11.2003
(51) Int. Cl.: G01L 1/22, G01G 3/14, G01G 21/24

(54) **Kraftmesszelle mit Befestigungsentkopplung durch vorstehende Flächen und kurze Einschnitte**
Force measuring cell with fastening decoupling by raised surfaces and short incisions
Cellule de mesure de force avec découplage de fixation par surfaces surélevées et courtes incisions

(43) Veröffentlichungstag der Anmeldung: 11.05.2005
(73) Patentinhaber: Mettler-Toledo AG, 8606 Greifensee (CH)
(72) Erfinder: Burkhard, Hans-Rudolf, 8942, Wila (CH)

(56) Entgegenhaltungen:
- EP-A- 0 195 875
- EP-A- 0 501 351
- EP-A- 1 083 420
- EP-A- 1 160 555
- EP-A- 1 347 277
- EP-B- 0 511 521
- CH-A- 670 704
- DE-A- 4 305 425
- DE-A- 19 859 992
- DE-C- 19 535 202

## Beschreibung

Die Erfindung betrifft eine Vorrichtung zur Kraftübertragung in einer Kraftmesszelle, mit einer Parallelführung mit einem feststehenden und einem auslenkbaren Parallelogrammschenkel, die über Parallelogrammlenker mit einander verbunden sind, wobei der feststehende Parallelogrammschenkel und/oder der auslenkbare Parallelogrammschenkel einen der Befestigung dienenden Teil mit mindestens zwei Befestigungsbereichen aufweist. Jeder Befestigungsbereich ist mit mindestens einer senkrecht zu einer jeweiligen Schenkeloberfläche verlaufenden Bohrung zur Befestigung eines Lastträgers an der Vorrichtung zur Kraftübertragung und/oder der Vorrichtung zur Kraftübertragung an einem Gehäuse oder einem Zwischenhalter versehen, und es sind spaltförmige Einschnitte im jeweiligen Parallelogrammschenkel vorhanden.

Die Einschnitte im Befestigungsteil eines jeweiligen Parallelogrammschenkels dienen der kräftemässigen Entkopplung eines oder mehrerer Befestigungsbereiche vom restlichen Parallelogrammschenkel und von denjenigen Bereichen der Kraftmesszelle, die der Kraftaufnahme und Kraftweiterleitung infolge einer auf den auslenkbaren Parallelogrammschenkel wirkenden Last dienen. Im Falle einer Verwendung einer solchen Kraftmesszelle in einer Waage erfolgt die Verbindung einer Waagschale oder eines Waagschalenträgers mit dem vertikal beweglichen Parallelögrammschenkel beziehungsweise die Verbindung der Kraftmesszelle, insbesondere der Vorrichtung zur Kraftübertagung mit einem Gehäuse und/oder einem Zwischenhalter häufig mittels Schrauben. Dabei führt einerseits die Herstellung der entsprechenden Gewindebohrungen in dem Material, aus welchem die Parallelogrammführung gebildet ist, und andererseits vor allem eine in einem solchen Gewinde eingedrehte Schraube zu Spannungen in dem das Gewinde umgebenden Material. Die Übertragung dieser Spannungen auf den Rest der Kraftmesszelle wird bevorzugt mit Einschnitten oder anderen Ausnehmungen im Material des der Befestigung dienenden Teils der Vorrichtung zur Kraftübertragung vermieden oder zumindest verringert. Solche von der Befestigung her rührende Kräfte und Spannungen können bekanntermassen eine Verfälschung des Messergebnisses verursachen.

Im Stand der Technik sind bereits Vorrichtungen zur Kraftübertragung mit Einschnitten oder Ausnehmungen in deren einen oder mehrere Befestigungsbereiche aufweisenden Teilen offenbart.

Eine solche Vorrichtung zur Kraftübertragung einer Kraftmesszelle, mit einer Parallelogrammführung ist in der EP 0 511 521 B1 beschrieben. Diese Kraftübertragungsvorrichtung weist an ihren gegenüber liegenden Enden im Bereich eines vertikal auslenkbaren Parallelogrammschenkels beziehungsweise eines feststehenden Parallelogrammschenkels jeweils eine Befestigungseinrichtung auf, um einerseits einen Lastträger zu befestigen und andererseits die Zelle selbst an einem Gehäuse anzubringen. Zumindest eine der Befestigungseinrichtungen weist einen Befestigungsbereich und einen Verbindungsbereich auf, welche durch einen Übergangsbereich entkoppelt sind. Letzterer ist als möglichst schmaler Steg ausgebildet, so dass der von den Befestigungsmitteln, beispielsweise Schrauben, verursachte Kraft- und Spannungsfluss vom Verbindungsbereich fern gehalten wird. Dieses Prinzip der Entkopplung findet in der Beschreibung der EP 0 511 521 B1 anhand von vielfältigen Ausgestaltungen der Kraftübertragungsvorrichtung, insbesondere von deren Verbindungsbereich und deren Befestigungsbereich seinen Niederschlag. Im Wesentlichen ist der Übergangsbereich durch verschieden ausgeformte Materialausnehmungen, insbesondere kreisförmige Bohrungen gekennzeichnet. Weiterhin wird vorgeschlagen, um die einzelnen Befestigungspunkte herum ringförmige Nuten vorzusehen, die die Befestigungspunkte vom restlichen Befestigungsbereich entkoppeln.

Die Fertigung der in der EP 0 511 521 B1 vorgeschlagenen Ausführungen ist relativ aufwändig, insbesondere gilt dies für die im Befestigungsbereich einen Befestigungspunkt umlaufenden, ringförmigen Nuten.

Die DE 195 35 202 C1 offenbart eine Wägezelle mit einer Parallelführung bestehend aus einem gehäusefesten Bereich und einem Lastaufnahmebereich, welche durch zwei Parallelogramm-Lenker miteinander verbunden sind. Der gehäusefeste Bereich weist in einer ersten Ausführungsform mindestens zwei vertikal verlaufende Bohrungen zur Befestigung der Wägezelle auf und ist mit Einschnitten versehen zur Entkopplung des Anschraubbereichs um die Befestigungsbohrungen herum vom restlichen gehäusefesten Bereich. Es handelt sich dabei um einen von oben und einen von unten kommenden Einschnitt, wobei der von unten kommende Einschnitt durch einen abknickenden waagrechten Teil verlängert ist, in dem die eine Bohrung endet.

In der zweiten Ausführungsform sind mindestens zwei horizontal verlaufende Bohrungen zur Befestigung der Wägezelle am Gehäuse vorhanden und von den Seiten her kommende Einschnitte, in welchen die Bohrungen enden. Ein dritter ebenfalls vertikal verlaufender Einschnitt ist zwischen den nebeneinander liegenden Bohrungen vorhanden. Diese Ausgestaltung belässt lediglich einen vertikal verlaufenden Steg und trennt somit den Anschraubbereich um die Bohrungen herum vom gehäusefesten Bereich, wodurch der der Messung dienende Bereich der Wägezelle vom Befestigungsbereich spannungs- und kräftemässig entkoppelt ist. In beiden Ausführungsformen durchsetzen die horizontal und die vertikal verlaufenden Einschnitte die Vorrichtung zur Kraftübertragung vollständig in ihrer Breite beziehungsweise in ihrer Höhe.

Nachteilig bei dieser Ausgestaltung ist, dass durch die die gesamte Höhe oder Breite der Vorrichtung zur Kraftübertragung im Bereich des jeweiligen Parallelogrammschenkels durchsetzenden Einschnitte die Stabilität insbesondere des gehäusefesten Bereichs und/oder des Lastaufnahmebereichs leidet. Insbesondere steht dadurch für ein Abfangen seitlich wirkender Momente nicht mehr die gesamte Höhe beziehungsweise Breite des jeweiligen Parallelogrammschenkels zur Verfügung.

Weitere Vorrichtungen sind aus der EP 0 501 351 A2 und aus der EP 1 083 420 bekannt.

Aufgabe der vorliegenden Erfindung ist es, eine gute Entkopplung des der Befestigung dienenden Teils im Bereich des jeweiligen Parallelogrammschenkels einer Kraftübertragungsvorrichtung bei gleichzeitig hoher Stabilität der Vorrichtung zur Kraftübertragung zu erreichen, wobei bei der Fertigung die Massnahmen zur Entkopplung wenig aufwändig sein sollen.

Diese Aufgabe wird mit den Merkmalen des Anspruchs 1 gelöst.

Vorteilhafte Weiterbildungen der Erfindung sind Gegenstand der abhängigen Ansprüche 2 bis 13.

Für eine Vorrichtung zur Kraftübertragung in einer Kraftmesszelle, mit einer Parallelführung mit einem feststehenden und einem auslenkbaren Parallelogrammschenkel, die über Parallelogrammlenker mit einander verbunden sind, weist der feststehende Parallelogrammschenkel und/oder der auslenkbare Parallelogrammschenkel einen der Befestigung dienenden Teil mit mindestens zwei Befestigungsbereichen auf. Jeder Befestigungsbereich ist im wesentlichen durch eine Befestigungsfläche und die Länge einer senkrecht dazu verlaufenden Bohrung zur Befestigung eines Lastträgers an der Vorrichtung zur Kraftübertragung und/oder der Vorrichtung zur Kraftübertragung an einem Gehäuse oder einem Zwischenhalter definiert. Es sind erste geradlinig verlaufende spaltförmige Einschnitte im jeweiligen Parallelogrammschenkel vorhanden, welche den der Befestigung dienenden Teil vom übrigen Parallelogrammschenkel trennen. Die Befestigungsbereiche weisen gegenüber der jeweiligen Parallelogrammschenkeloberfläche vorstehende Befestigungsflächen auf. Die ersten spaltförmigen Einschnitte durchsetzen den Parallelogrammschenkel nur in einem Teil der Breite und der Höhe der Kraftübertragungsvorrichtung, das heisst sie sind in ihrer flächigen Ausdehnung begrenzt, wobei deren jeweilige Ausdehnung im Parallelogrammschenkel im wesentlichen der Ausdehnung eines jeden Befestigungsbereichs entspricht. Ein Befestigungsbereich ist in seiner Ausdehnung also im wesentlichen durch seine Befestigungsfläche und senkrecht dazu durch die Länge der der Befestigung dienenden Bohrungen definiert.

Das Vorhandensein von mindestens zwei Befestigungsbereichen gewährleistet eine stabile Verbindung der Kraftmesszelle mit dem Gehäuse oder mit einem Zwischenhalter beziehungsweise eines Lastträgers mit der Kraftübertragungsvorrichtung. Einerseits ist so ein maximaler Abstand zwischen den Befestigungsbereichen erreichbar und andererseits wird die Vorrichtung zur Kraftübertragung gegenüber Torsionskräften und Eckenlasteintrag mit zunehmender Zahl von Befestigungsbereichen, insbesondere auch im Falle höherlastiger Kraftmesszellen, relativ unempfindlich. Die in ihrer flächigen Ausdehnung in der Projektion auf die jeweils entsprechende Ausdehnung des Befestigungsbereichs beschränkten spaltförmigen Einschnitte durchsetzen lediglich einen Teil der Breite beziehungsweise der Höhe einer Kraftübertragungsvorrichtung. Sie reichen allenfalls, herstellungsbedingt, im Bereich der Oberfläche über die jeweils entsprechende Ausdehnung des Befestigungsbereichs hinaus.

Auf diese Weise bleibt genügend Material übrig, das den der Befestigung dienende Teil mit dem Rest des jeweiligen Parallelogrammschenkel verbindet, so dass einerseits die Spannungen vom empfindlichen Teil der Kraftübertragungsvorrichtung weitgehend entkoppelt sind, andererseits die Vorrichtung zur Kraftübertragung noch eine genügend hohe Steifigkeit besitzt, um im Falle eines Eintrags seitlicher Momente auf die Vorrichtung diese aufzunehmen, da die gesamte Höhe wie auch die gesamte Breite des jeweiligen Parallelogrammschenkels zum Abfangen dieser Momente zur Verfügung stehen. Ferner gewährleisten die Erhebungen an den Befestigungsbereichen wohldefinierte Zonen der Befestigung, so dass eine gleichmässig symmetrische Flächenpressung vorhanden ist.

In einer bevorzugten Ausführungsform sind die Befestigungsbereiche sowie die spaltförmigen Einschnitte entweder einzeln oder paarweise spiegelsymmetrisch in Bezug auf eine mittig in der Parallelführung verlaufende Parallelogrammebene angeordnet.

Die spaltförmigen Einschnitte können nun in vorteilhaften Ausgestaltungen in einer Ebene schräg oder parallel oder senkrecht zur entsprechenden Befestigungsfläche verlaufen.

In bevorzugter Weiterbildung der Erfindung können weitere geradlinig verlaufende spaltförmige Einschnitte, insbesondere zweite und/oder dritte geradlinig verlaufende spaltförmige Einschnitte vorhanden sein. Diese können ebenfalls in einer Ebene schräg zur entsprechenden Befestigungsfläche verlaufen. In einer besonderen Ausführungsform sind die zweiten und/oder die dritten spaltförmigen Einschnitte jeweils in einer Ebene senkrecht zu den ersten spaltförmigen Einschnitten ausgerichtet.

Die Vorrichtung zur Kraftübertragung kann nun derart ausgebildet sein, dass die mindestens zwei Befestigungsbereiche seitlich, im Bereich einer jeweiligen Stirnfläche eines im wesentlichen quaderförmig ausgebildeten feststehenden Parallelogrammschenkels und/oder eines entsprechend ausgebildeten auslenkbaren Parallelogrammschenkels positioniert sind. In alternativen Ausformungen sind die mindestens zwei Befestigungsbereiche im Bereich einer Oberseite oder einer Unterseite eines feststehenden im wesentlichen quaderförmig ausgebildeten Parallelogrammschenkels und/oder auslenkbaren Parallelogrammschenkels positioniert. In weiteren Ausführungsformen sind die mindestens zwei Befestigungsbereiche aufgeteilt an zwei einander gegenüber liegenden Seiten eines im wesentlichen quaderförmig ausgebildeten feststehenden Parallelogrammschenkels und/oder auslenkbaren Parallelogrammschenkels positioniert.

Die Befestigungsflächen können nun rechteckförmig ausgestaltet sein und/oder jede Befestigungsfläche ist punktsymmetrisch um das Zentrum der Bohrung angeordnet. Insbesondere kann eine Befestigungsfläche auch kreisförmig sein. Eine Befestigungsfläche muss nicht notwendigerweise, kann aber in bevorzugter Ausgestaltung eine ebene Fläche sein.

In einer besonders bevorzugten Ausgestaltung der Erfindung weist die Vorrichtung zur Kraftübertragung eine Parallelführung auf, welche aus einem einstückigen Materialblock gebildet ist.

In einer bevorzugten Weiterbildung ist die gesamte Vorrichtung zur Kraftübertragung einstückig aus einem Materialblock gebildet.

Die Erfindung wird anhand von Beispielen, wie sie schematisch in den Zeichnungen dargestellt sind, im Folgenden beschrieben. Es zeigen:
- Figur 1: eine Vorrichtung zur Kraftübertragung in einer Kraftmesszelle, mit einem der Kraftuntersetzung dienenden Hebelwerk in der Seitenansicht;
- Figur 2: eine perspektivische Darstellung eines Ausschnitts einer Vorrichtung zur Kraftübertragung mit vier seitlichen Befestigungsbereichen und ersten spaltförmigen Einschnitten, wobei die Bilder a) bis c) verschiedene Varianten darstellen;
- Figur 3: eine perspektivische Darstellung eines Ausschnitts einer Vorrichtung zur Kraftübertragung mit vier seitlichen Befestigungsbereichen und ersten und zweiten spaltförmigen Einschnitten, wobei die Bilder a) und b) verschiedene Varianten darstellen;
- Figur 4: eine perspektivische Darstellung eines Ausschnitts einer Vorrichtung zur Kraftübertragung mit vier seitlichen Befestigungsbereichen und ersten, zweiten und dritten spaltförmigen Einschnitten;
- Figur 5: eine perspektivische Darstellung eines Ausschnitts einer Vorrichtung zur Kraftübertragung mit oben oder unten an einen Parallelogrammschenkel der Vorrichtung zur Kraftübertragung angebrachten Befestigungsbereichen; a) mit ersten spaltförmigen Einschnitten b) mit die ersten spaltförmigen Einschnitte ergänzenden zweiten spaltförmigen Einschnitten in einer zweiten Richtung, und c) mit ersten, zweiten und dritten spaltförmigen Einschnitten;
- Figur 6: eine perspektivische Darstellung eines Ausschnitts einer Vorrichtung zur Kraftübertragung mit oben und unten an der Vorrichtung zur Kraftübertragung angebrachten Befestigungsbereichen, a) mit ersten spaltförmigen Einschnitten b) und c) verschiedene Varianten mit ersten und zweiten spaltförmigen Einschnitten;
- Figur 7: eine perspektivische Darstellung eines Ausschnitts einer Vorrichtung zur Kraftübertragung mit vier seitlichen Befestigungsbereichen und ersten schräg zu den Befestigungsflächen verlaufenden spaltförmigen Einschnitten;
- Figur 8: eine perspektivische Darstellung eines Ausschnitts einer Vorrichtung zur Kraftübertragung mit drei seitlichen Befestigungsbereichen und ersten und zweiten spaltförmigen Einschnitten, sowie einem dritten Einschnitt an der Unterseite;
- Figur 9: eine perspektivische Darstellung eines Ausschnitts einer Vorrichtung zur Kraftübertragung mit zwei seitlichen Befestigungsbereichen und ersten und zweiten spaltförmigen Einschnitten.

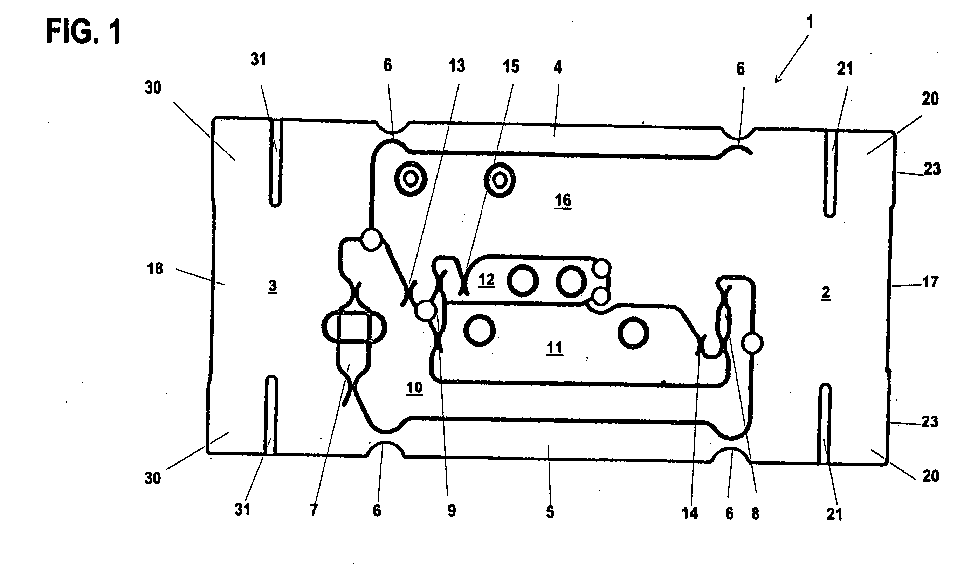

Die Figur 1 zeigt in der Seitenansicht eine Vorrichtung zur Kraftübertragung 1, wie sie in einer Kraftmesszelle beispielsweise für eine Waage Verwendung findet. Diese Kraftübertragungsvorrichtung 1 weist eine Parallelführung mit einem oberen und einem unteren Parallelogrammlenker 4, 5, welche jeweils an einen vertikal beweglichen Parallelogrammschenkel 3 und einen feststehenden Parallelogrammschenkel 2 über Biegelager 6 angelenkt sind, auf. Die Kraftübertragungsvorrichtung 1 weist ein der Kraftuntersetzung dienendes Hebelwerk auf, welches hier aus drei Hebeln 10, 11, 12 besteht. Die Hebel 10, 11, 12 sind mittels Koppelelementen 7, 8, 9 mit dem vertikal beweglichen Parallelogrammschenkel 3 bzw. untereinander verbunden und über Biegelager 13, 14, 15 an einem Ausleger 16 des feststehenden Parallelogrammschenkels 2 abgestützt.

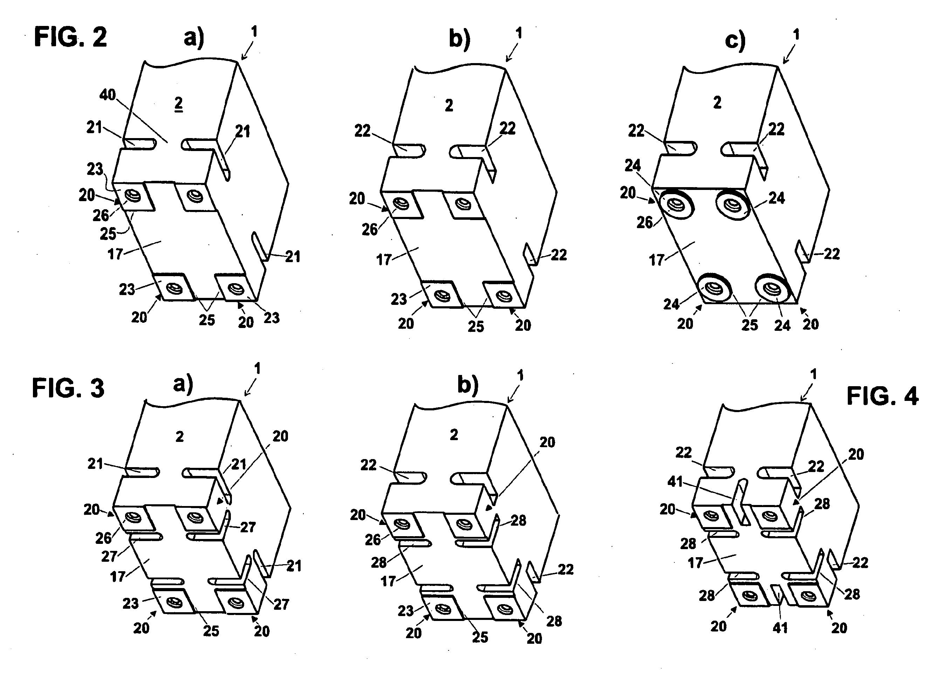

Die Vorrichtung zur Kraftübertragung 1 weist an der Stirnfläche 17 ihres feststehenden Parallelogrammschenkels 2 vier Befestigungsbereiche 20 auf, deren gegenüber der Stirnfläche leicht erhobene Befestigungsflächen 23 beim Befestigen der Kraftübertragungsvorrichtung 1 beispielweise an einem Gehäuse oder einem gehäusefesten Zwischenhalter (hier nicht eingezeichnet) mit diesem jeweils in Anlage gelangen. Eine solche Befestigung kann zum Beispiel mittels Schrauben, welche in jeweilige Gewindebohrungen der entsprechenden Befestigungsbereiche 20 eingedreht werden, erfolgen. Die Befestigungsbereiche 20 sind einzeln von dem Rest des feststehenden Parallelogrammschenkels 2 und damit vom Körper der Kraftübertragungsvorrichtung 1 durch vier spaltförmige Einschnitte 21 teilweise abgetrennt. In der Figur ist jeweils nur ein oberer und ein unterer spaltförmiger Einschnitt 21 sichtbar. Diese spaltförmigen Einschnitte 21 umfassen in ihrer Ausdehnung etwa die Ausdehnung der Befestigungsfläche 23 eines jeweiligen Befestigungsbereichs 20, wie in den Figuren 2 bis 9 detailliert zu sehen ist.

An ihrer der Stirnseite 17 gegenüberliegenden Stirnfläche 18 weist der vertikal bewegliche Parallelogrammschenkel 3 ebenfalls vier Befestigungsbereiche 30 für einen hier nicht eingezeichneten Lastträger oder ein entsprechendes Zwischenstück auf. Die Befestigungsbereiche 30 können völlig analog zu den Befestigungsbereichen 20 ausgestaltet sein, ebenso sind sie vom Rest des vertikal beweglichen Parallelogrammschenkels 3 und damit vom Körper der Kraftübertragungsvorrichtung 1 durch obere und untere spaltförmigen Einschnitte 31 teilweise abgetrennt.

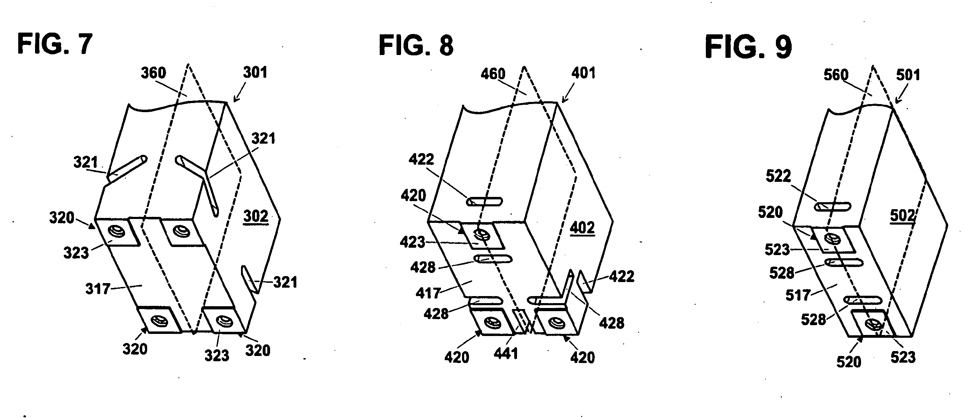

Die Parallelführung ist spiegelsymmetrisch zu einer Symmetrieebene, welche parallel zu einer Parallelogrammebene mittig in der Vorrichtung zur Kraftübertragung verläuft (siehe auch Figuren 7 bis 9), ausgestaltet.

Figur 2 zeigt in perspektivischer Darstellung Ausschnitte einer Vorrichtung zur Kraftübertragung 1 im Bereich eines Parallelogrammschenkels, beispielsweise dem feststehenden Schenkel 2 mit seitlicher Befestigungsmöglichkeit des Parallelogrammschenkels 2, welcher mit einem hier nicht sichtbaren Gehäuse oder gehäusefesten Zwischenstück verbunden werden kann. Insgesamt vier Befestigungsbereiche 20 sind jeweils nahe einer Ecke des Parallelogrammschenkels 2 angeordnet, wobei jedem Befestigungsbereich 20 jeweils ein erster spaltförmiger Einschnitt 21 zugeordnet ist. Diese spaltförmigen Einschnitte 21 werden durch Materialwegnahme in einem Abstand von einigen Millimetern von der Stirnfläche 17 erzeugt. Ein bevorzugtes Verfahren zur Erzeugung der spaltförmigen Einschnitte 21 ist das Fräsen, sie können jedoch auch mittels Erosionsverfahren hergestellt werden. Die spaltförmigen Einschnitte 21 dienen der kräftemässigen Entkopplung der Befestigungsbereiche 20 vom Rest des Parallelogrammschenkels 2 und damit vom Körper der Kraftübertragungsvorrichtung 1.

Ein vertikal beweglicher Parallelogrammschenkel 3 kann in völlig analoger Weise hinsichtlich seiner Befestigungsbereiche 30 für die Befestigung eines Waagschalenträgers oder eines entsprechenden Zwischenstücks ausgestaltet sein. Daher wird in den folgenden Ausführungen nicht mehr explizit auf diesen Fall eingegangen. Die Offenbarung gilt jedoch für die entsprechenden, auch nachfolgend beschriebenen Ausgestaltungen einer Vorrichtung zur Kraftübertragung im Bereich des vertikal beweglichen Parallelogrammschenkels gleichermassen.

Die vier Befestigungsbereiche 20 weisen gegenüber der Stirnfläche 17 eine geringfügige Erhebung 25 mit ebenen Befestigungsflächen 23 auf, mit der die Vorrichtung zur Kraftübertragung 1 beim Befestigungen an einem Gehäuse oder Zwischenhalter jeweils in Anlage gelangt. Etwa mittig zur Befestigungsfläche 23 befinden sich Gewindebohrungen 26 in welche Befestigungsschrauben eingedreht werden können. Die Gewindebohrungen enden jeweils im spaltförmigen Einschnitt 21. Es versteht sich von selbst, dass auch andere Befestigungsmittel, beispielsweise Bolzen für eine Verbindung der Vorrichtung zur Kraftübertragung 1 an einem Gehäuse oder einem Zwischenhalter und/oder zur Befestigung der Waagschale an der Vorrichtung zur Kraftübertragung Verwendung finden können.

Der in der Figur 2a) gezeigte Parallelogrammschenkel weist Befestigungsbereiche 20 mit Erhebungen 25, welche eine rechteckige beziehungsweise quadratische Befestigungsfläche 23 besitzen, die bündig mit den Ecken des Schenkels 2 abschliessen. Die jeweils einem Befestigungsbereich 20 zugeordneten ersten spaltförmigen Einschnitte 21 sind hier durch Scheibenfräsen erzeugt worden, was an dem bogenförmigen Grund des spaltförmigen Einschnitts 21 erkennbar ist. Die spaltförmigen Einschnitte 21 verlaufen parallel zur jeweiligen Befestigungsfläche 23 und entsprechen in ihrer flächigen Ausdehnung etwa derjenigen der Befestigungsfläche 23. Durch die spaltförmigen Einschnitte entsteht ein Steg 40 zwischen den Befestigungsbereichen 20 und dem Rest des Parallelogrammschenkels 2, welcher, da er vergleichsweise schmal ausgebildet ist, einerseits den von den Befestigungsmitteln verursachten Kraft bzw. Spannungsfluss nicht weiter leitet, wobei andererseits die Kraftübertragungsvorrichtung an den Befestigungsbereichen noch eine hohe Festigkeit aufweist, da sowohl die gesamte Höhe als auch Breite der Kraftübertragungsvorrichtung 1 trotz der Entkopplung mittels spaltförmigen Einschnitten 21 hier noch materiell vorhanden ist.

Die Figur 2b) zeigt den Ausschnitt des Parallelogrammschenkels 2 von Figur 2a), wobei hier die ersten spaltförmigen Einschnitte 22 etwas breiter ausgeformt sind und der Einschnittgrund flach ist. Diese spaltförmigen Einschnitte 22 wurden mittels Schaftfräsen hergestellt.

In der Figur 2c) weisen die Erhebungen 25 kreisförmige Befestigungsflächen 24 auf. Diese haben im Befestigungsfall aufgrund ihrer Axialsymmetrie hinsichtlich der Bohrung den Vorteil einer gleichmässigeren Kraftverteilung um dieselbe. Es sei an dieser Stelle angemerkt, dass die Befestigungsflächen 23, 24 gross genug sein müssen, so dass der Druck der Verbindung bei der Befestigung an einem Gehäuse oder einem Zwischenhalter nicht zu hoch wird und hinsichtlich eines Fliessens des Materials im unkritischen Bereich bleibt.

Zu diesen ersten spaltförmigen Einschnitten 21, 22, können nun weitere spaltförmigen Einschnitte um die jeweiligen Befestigungsbereiche 20 angebracht werden. Die Figuren 3a) und 3b) zeigen in zu den Figuren 2a) und 2b) analoger Darstellung eine Ausführungsform einer Vorrichtung zur Kraftübertragung 1, welche an ihrer Stirnfläche 17 noch zweite spaltförmigen Einschnitte 27, 28 in einer Richtung senkrecht zu den ersten spaltförmigen Einschnitten 21, 22 aufweist. Diese spaltförmigen Einschnitte 27, 28 sind in ihrer Ausdehnung ebenso wie die ersten spaltförmigen Einschnitte 21, 22 etwa auf einen Befestigungsbereich 20 begrenzt und dienen vorwiegend der spannungsmässigen Entkopplung der Befestigungsbereiche 20 untereinander.

Die zweiten spaltförmigen Einschnitte könnten prinzipiell auch die gesamte Breite der Kraftübertragungsvorrichtung 1 im Bereich des Schenkels 2 durchsetzen, um so die Entkopplung der Befestigungsbereiche 20 untereinander und zwischen den oberen und unteren Befestigungsbereichen noch zu verstärken.

Die Figur 4 zeigt in zu den Figuren 2 und 3 analoger Darstellung eine Ausführungsform einer Kraftübertragungsvorrichtung 1, welche dritte spaltförmigen Einschnitte 41 in zu den ersten und zweiten spaltförmigen Einschnitten senkrechter Richtung aufweist. Diese dritten spaltförmigen Einschnitte 41 sind mittig zwischen den beiden oberen und den beiden unteren Befestigungsbereichen 20 angebracht. Hierdurch werden als Materialverbindungen zwischen den als nahezu isolierte Befestigungswürfel oder - quader ausgebildeten Befestigungsbereichen 20 und dem Rest der Kraftübertragungsvorrichtung 1 in allen drei Dimensionen lediglich noch schmale Stege belassen, was der Kraft- und Momententkopplung in besonderer Weise zugute kommt. Insbesondere sind auf diese Weise auch sämtliche Befestigungsbereiche 20 untereinander entkoppelt. Eine solche Ausführungsform weist ein hohes Mass an Entkopplung der Befestigungsbereiche 20, gleichzeitig jedoch auch eine höhere Festigkeit auf.

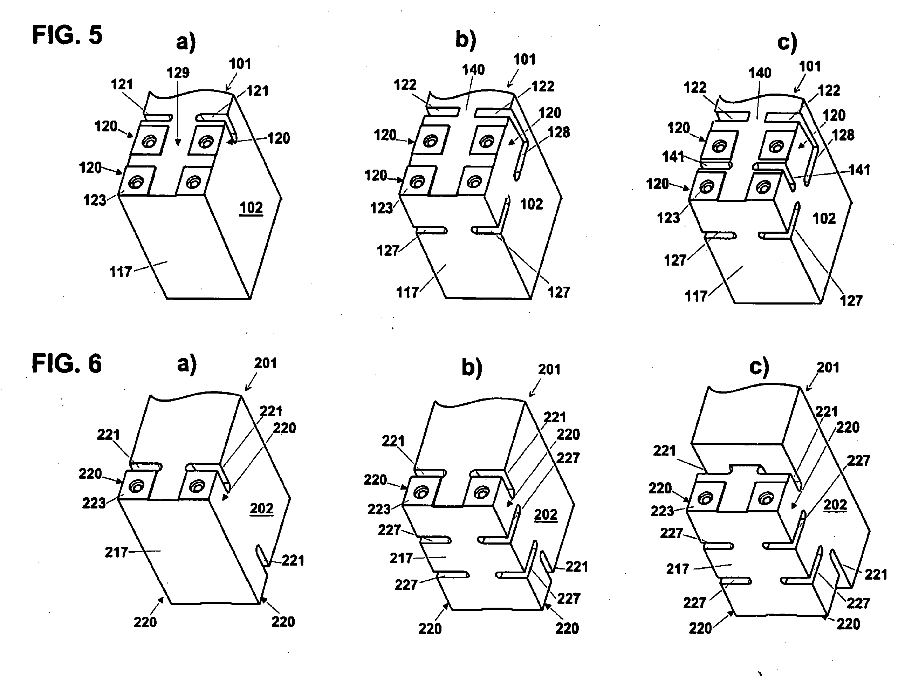

In den Figuren 5a) bis 5c) ist ein Ausschnitt einer Kraftübertragungsvorrichtung 101 zu sehen, welche beispielweise an ihrem feststehenden Parallelogrammschenkel 102 durch vier nahe der Oberseite angeordnete Befestigungsbereiche 120 mit über die Oberfläche 129 vorstehenden ebenen Befestigungsflächen 123 mit einem Gehäuse oder einem Zwischenstück verbindbar ist. Ebenso könnten die Befestigungsbereiche 120 entsprechend an der Unterseite des betreffenden Parallelogrammschenkels 102 angeordnet sein. In Figur 5a) sind ebenfalls erste spaltförmigen Einschnitte 121, die der kräftemässigen Entkopplung der Befestigungsbereiche 120 vom Rest des Parallelogrammschenkels 102 dienen, den der Stirnfläche 117 abgewandten Befestigungsbereichen 120 zugeordnet. Die Einschnittsfläche entspricht etwa der hier rechteckförmigen Befestigungsfläche 123 der Befestigungsbereiche 120.

Zur weiteren, und gegenüber der in Figur 5a) dargestellten Variante verbesserten Entkopplung des Körpers der Vorrichtung zur Kraftübertragung 1 von den Befestigungsbereichen 120, insbesondere von den der Stirnfläche 117 abgewandten Befestigungsbereichen 120 sind zweite spaltförmigen Einschnitte 127, 128 etwa senkrecht zu den ersten spaltförmigen Einschnitten, etwa parallel zu den Befestigungsflächen im Parallelogrammschenkel 102 angeordnet. Die der Stirnfläche abgewandten zweiten spaltförmigen Einschnitte 128 sind hier in Kontakt mit den ersten spaltförmigen Einschnitten 121 stehend ausgestaltet, was jedoch nicht zwingend notwendig ist. Bevorzugt werden sie mittels Schaftfräsen von den äusseren Flächen der Parallelogrammebene her erzeugt. Die von der Stirnfläche 117 her kommenden zweiten spaltförmigen Einschnitte 127 dienen ebenfalls hauptsächlich einer verbesserten Entkopplung der stirnflächennahen Befestigungsbereiche 120 vom restlichen Parallelogrammschenkel 102.

Auch für diese Anordnung ist es möglich, die zweiten spaltförmigen Einschnitte 127 noch durch dritte spaltförmige Einschnitte 141 und gegebenenfalls einen vierten spaltförmigen Einschnitt, vorzugsweise zur Entkopplung der Befestigungsbereiche 120 untereinander am Parallelogrammschenkel 102 anzubringen, wie die Figur 5c) für den Fall mit zweiten spaltförmigen Einschnitten 127 und dritten spaltförmigen Einschnitten 141, die parallel zu den ersten spaltförmigen Einschnitten verlaufen, zeigt.

In Figur 6 sind drei verschiedenen Varianten einer Ausführungsform der Kraftübertragungsvorrichtung 201 mit insgesamt vier, d.h. jeweils zwei oben und zwei unten beispielsweise am feststehenden Parallelogrammschenkel 202 angeordneten Befestigungsbereichen 220 dargestellt. Die ersten spaltförmigen Einschnitte 221 sind analog der spaltförmigen Einschnitte 121 der in Figur 5a) dargestellten Ausführungsform ausgebildet, kommen jedoch von oben und von unten, wie in der Figur 6a) dargestellt ist.

In der Fig. 6b) ist die Ergänzung der ersten spaltförmigen Einschnitte 221 durch zweite spaltförmigen Einschnitte 227, die wie die in Figur 5b) gezeigten zweiten spaltförmigen Einschnitte 127 ebenfalls parallel zur entsprechenden Befestigungsfläche verlaufen, dargestellt. Die zweiten spaltförmigen Einschnitte 227 dienen einerseits der Entkopplung der Befestiguhgsbereiche 220 vom restlichen Parallelogrammschenkel und andererseits der Entkopplung von oberen und unteren Befestigungsbereichen 220 untereinander.

Die Figur 6c) zeigt eine Ausgestaltung gemäss Figur 6b), jedoch weist der Körper der Kraftübertragungsvorrichtung 1 eine von der Ausdehnung zwischen oberen und unteren Befestigungsflächen 223 verschiedene Höhe auf.

Für die in den Figuren 6b) und 6c) gezeigten Varianten können die ersten und zweiten spaltförmigen Einschnitte 221 ebenfalls durch dritte spaltförmige Einschnitte ergänzt sein, welche die beiden oberen und die beiden unteren Befestigungsbereiche 220 jeweils voneinander entkoppeln.

An dieser Stelle sei erwähnt, dass eine Aufteilung der vier Befestigungsbereiche zu je zwei auf die beiden in der Parallelogrammebene liegenden Aussenseiten des Parallelogrammschenkels ebenso möglich sind, wobei die ersten spaltförmigen Einschnitte analog den ersten spaltförmigen Einschnitten 221 in der Figur 6a) verlaufen würden.

In der Figur 7 ist gezeigt, dass die spaltförmigen Einschnitte nicht zwangsläufig parallel zu den Befestigungsflächen verlaufen müssen. Auch schräg zu diesen Flächen verlaufende erste spaltförmigen Einschnitte 321 sind denkbar; dies gilt insbesondere auch für die hier nicht dargestellten zweiten und dritten spaltförmigen Einschnitte. Es ist jedoch zu beachten, dass diese schrägen spaltförmigen Einschnitte jeweils paarweise im wesentlichen zueinander spiegelsymmetrisch in Bezug auf eine mittig in der Parallelführung verlaufenden Parallelogrammebene, welche hier die Symmetrieebene 360 der Parallelführung darstellt, ausgebildet sind. Diese Symmetrieebene 360 ist in der Figur durch unterbrochene Linien eingezeichnet. Ohne diese Vorgabe bestünde die Gefahr, dass die durch die Kraftübertragungsvorrichtung übertragene Kraft in zunehmendem Masse auch Komponenten aufweisen würde, die von der gewünschten Richtung der Auslenkung des beweglichen Parallelogrammschenkelsalso von der Richtung der Schwerkraft im Falle der Verwendung der Kraftübertragungsvorrichtung in einer Waage - abweichen. Es sei darauf hingewiesen, dass die Ausdehnung solcher schrägen spaltförmigen Einschnitte 321, wenn sie auf die Richtung der Befestigungsflächen 323 projiziert wird, etwa der Ausdehnung der Befestigungsflächen 323 entspricht.

Die Figur 8 zeigt in perspektivischer Darstellung eine Variante einer Vorrichtung zur Kraftübertragung 401 mit drei seitlichen Befestigungsbereichen 420, wovon zwei unten und eine oben am Parallelogrammschenkel 402 angeordnet sind. Eine umgekehrte Anordnung, mit zwei Befestigungsbereichen 420 oben und einem unten ist ebenso denkbar. Die unteren Befestigungsbereiche 420 sind durch erste spaltförmigen Einschnitte 422, zweite spaltförmige Einschnitte 428 und einem dritten spaltförmigen Einschnitt 441 vom restlichen Parallelogrammschenkel 402 entkoppelt, der obere, mittig angeordnete Befestigungsbereich 420 durch einen ersten 422 und einen zweiten spaltförmigen Einschnitt 428, wobei sämtliche spaltförmigen Einschnitte mittels Schaftfräsen erzeugt wurden. Sowohl die Befestigungsbereiche 420 als auch die spaltförmigen Einschnitte 422, 427, 441 sind spiegelsymmetrisch bezüglich der Symmetrieebene 460 der Kraftübertragungsvorrichtung 402 angeordnet.

Figur 9 zeigt in einer perspektivischen Darstellung einen Ausschnitt einer Vorrichtung zur Kraftübertragung 501 mit zwei an der Stirnfläche 517 über einander angeordneten Befestigungsbereichen 520, die jeweils mit einem ersten 522 und einem zweiten spaltförmigen Einschnitt 528 versehen sind. Sowohl die Befestigungsbereiche 520 als auch die spaltförmigen Einschnitte 522, 528 sind spiegelsymmetrisch bezüglich der Symmetrieebene 560 der Kraftübertragungsvorrichtung 502 angeordnet.

Die erfindungsgemässe Vorrichtung zur Kraftübertragung wurde in einigen bevorzugten Ausgestaltungen beschrieben und dargestellt. Anhand der erfindungsgemässen Lehre sind jedoch weitere fachmännische Ausgestaltungen realisierbar. Insbesondere sind die beschriebenen Massnahmen zur Entkopplung durch spaltförmige Einschnitte gleichermassen auf Vorrichtungen zur Kraftübertragung in Kraftmesszellen, die nach dem Prinzip der elektromagnetischen Kraftkompensation arbeiten oder in Kraftmesszellen, deren Verformung mittels Dehnmessstreifen detektiert wird, wie auch weiteren, hier nicht näher bezeichneten Kraftmesszellen, anwendbar.

### Bezugszeichenliste

- 1, 101, 201, 301, 401, 501: Vorrichtung zur Kraftübertragung, Kraftübertragungsvorrichtung
- 2, 102, 202, 302, 402, 502: Feststehender Parallelogrammschenkel, Schenkel
- 3: Beweglicher Parallelogrammschenkel, Schenkel
- 4: Oberer Lenker
- 5: Unterer Lenker
- 6: Biegelager
- 7: Koppelelement
- 8: Koppelelement
- 9: Koppelelement
- 10: Hebel
- 11: Hebel
- 12: Hebel
- 13: Biegelager
- 14: Biegelager
- 15: Biegelager
- 16: Ausleger
- 17,117,217,317,417,517: Stirnfläche
- 18: Stirnfläche
- 20, 120, 220, 320, 420, 520: Befestigungsbereich
- 21, 121, 221, 321: Erste spaltförmige Einschnitte
- 22, 122, 422, 522: Erste spaltförmige Einschnitte
- 23, 123, 223, 323, 423, 523: Befestigungsfläche
- 24: Runde Befestigungsfläche
- 25: Erhebung
- 26: Gewindebohrungen
- 27, 127, 227: Zweite spaltförmige Einschnitte
- 28, 128, 428, 528: Zweite spaltförmige Einschnitte
- 30: Befestigungsbereich
- 31: Spaltförmiger Einschnitt
- 40, 140: Steg
- 41,141,441: Dritte spaltförmige Einschnitte
- 360, 460, 560: Symmetrieebene

## Patentansprüche

1. Vorrichtung zur Kraftübertragung (1, 101, 201, 301, 401, 501) in einer Kraftmesszelle, mit einer Parallelführung mit einem feststehenden (2, 102, 202, 302, 402, 502) und einem auslenkbaren Parallelogrammschenkel (3), die über Parallelogrammlenker (4, 5) mit einander verbunden sind, wobei der feststehende Parallelogrammschenkel (2, 102, 202, 302, 402, 502) und der auslenkbare Parallelogrammschenkel (3) jeweils eine Stirnfläche (17, 18, 117, 217, 317, 417, 517) aufweist und der feststehende Parallelogrammschenkel (2, 102, 202, 302, 402, 502) und/oder der auslenkbare Parallelogrammschenkel (3) einen der Befestigung dienenden Teil mit mindestens zwei im wesentlichen durch eine Befestigungsfläche (23, 24, 123, 223, 323, 423, 523) und die Länge einer senkrecht dazu verlaufenden Bohrung (26) zur Befestigung eines Lastträgers an der Vorrichtung zur Kraftübertragung (1, 101, 201, 301, 401, 501) und/oder der Vorrichtung zur Kraftübertragung (1, 101, 201, 301, 401, 501) an einem Gehäuse oder einem Zwischenhalter definierten Befestigungsbereichen (20, 30, 120, 220, 320, 420, 520) aufweist, und wobei erste geradlinig verlaufende spaltförmige Einschnitte (21, 22, 121, 122, 221, 321, 422, 522) im jeweiligen Parallelogrammschenkel (2, 3, 102, 202, 302, 402, 502) vorhanden sind, welche den der Befestigung dienenden Teil vom übrigen Parallelogrammschenkel (2, 3, 102, 202, 302, 402, 502) trennen, **dadurch gekennzeichnet dass** die Befestigungsflächen (23, 24, 123, 223, 323, 423, 523) der Befestigungsbereiche (20, 30, 120, 220, 320, 420, 520) gegenüber der jeweiligen Schenkeloberfläche vorstehend ausgebildet sind, und dass die ersten spaltförmigen Einschnitte (21, 22, 121, 122, 221, 321, 422, 522) den jeweiligen Parallelogrammschenkel (2, 3, 102, 202, 302, 402, 502) in einer Ebene parallel oder schräg zur Stirnfläche (17, 18, 117, 217, 317, 417, 517) teilweise durchsetzen und verglichen mit der Breite und der Höhe der Stirnfläche (17, 18, 117, 217, 317, 417, 517) in ihrer flächigen Ausdehnung begrenzt sind auf einen Teil der Breite und der Höhe der Stirnfläche (17, 18, 117, 217, 317, 417, 517), wobei deren jeweilige Ausdehnung im Parallelogrammschenkel (2, 3, 102, 202, 302, 402, 502) im wesentlichen der Ausdehnung eines jeden Befestigungsbereichs (20, 30, 120, 220, 320, 420, 520) entspricht.

2. Vorrichtung nach Anspruch 1, **dadurch gekennzeichnet, dass** die Befestigungsbereiche (20, 30, 120, 220, 320, 420, 520) sowie die spaltförmigen Einschnitte entweder einzeln oder paarweise spiegelsymmetrisch in Bezug auf eine mittig in der Parallelführung verlaufende Parallelogrammebene (360, 460, 560) angeordnet sind.

3. Vorrichtung nach Anspruch 1 oder 2, **dadurch gekennzeichnet, dass** weitere geradlinig verlaufende spaltförmige Einschnitte, insbesondere zweite geradlinig verlaufende spaltförmige Einschnitte (27, 28, 127, 128, 227, 428, 528) und/oder dritte geradlinig verlaufende spaltförmige Einschnitte (41, 141, 441) vorhanden sind.

4. Vorrichtung nach einem der Ansprüche 1 bis 3, **dadurch gekennzeichnet, dass** ein erster oder ein zweiter oder ein dritter spaltförmiger Einschnitt in einer Ebene schräg oder parallel oder senkrecht zur Befestigungsfläche (23, 24, 123, 223, 323, 423, 523) verläuft.

5. Vorrichtung nach Anspruch 3 oder 4, **dadurch gekennzeichnet, dass** die zweiten spaltförmigen Einschnitte (27, 28, 127, 128, 227, 428, 528) und/oder die dritten spaltförmigen Einschnitte (41, 141, 441) senkrecht zu den ersten spaltförmigen Einschnitten (21, 22, 121, 122, 221, 422, 522) ausgerichtet sind.

6. Vorrichtung nach einem der Ansprüche 1 bis 5, **dadurch gekennzeichnet, dass** die Befestigungsbereiche (20, 30, 320, 420, 520) seitlich, im Bereich einer jeweiligen Stirnfläche (17, 18, 317, 417, 517) eines im wesentlichen quaderförmig ausgebildeten feststehenden Parallelogrammschenkels (2, 302, 402, 502) und/oder auslenkbaren Parallelogrammschenkels (3) positioniert sind.

7. Vorrichtung nach einem der Ansprüche 1 bis 5, **dadurch gekennzeichnet, dass** sämtliche Befestigungsbereiche (120) im Bereich einer Oberseite oder einer Unterseite eines im Wesentlichen quaderförmig ausgebildeten feststehenden Parallelogrammschenkels (102) und/oder auslenkbaren Parallelogrammschenkels positioniert sind.

8. Vorrichtung nach einem der Ansprüche 1 bis 5, **dadurch gekennzeichnet, dass** die mindestens zwei Befestigungsbereiche (220) aufgeteilt, an zwei einander gegenüber liegenden Seiten, insbesondere an einer Ober- und Unterseite beziehungsweise an den in der Parallelogrammebene liegenden Aussenseiten, eines im wesentlichen quaderförmig ausgebildeten feststehenden Parallelogrammschenkels (202) und/oder auslenkbaren Parallelogrammschenkels positioniert sind.

9. Vorrichtung nach einem der Ansprüche 1 bis 8, **dadurch gekennzeichnet, dass** jede Befestigungsfläche (23, 123, 223, 323, 423, 523) rechteckförmig ausgestaltet ist.

10. Vorrichtung nach einem der Ansprüche 1 bis 9, **dadurch gekennzeichnet, dass** jede Befestigungsfläche (23, 24, 223, 323, 423, 523) punktsymmetrisch um das Zentrum der Bohrung angeordnet ist.

11. Vorrichtung nach Anspruch 10, **dadurch gekennzeichnet, dass** jede Befestigungsfläche (24) kreisförmig ist.

12. Vorrichtung nach einem der Ansprüche 1 bis 11, **dadurch gekennzeichnet, dass** die Parallelführung aus einem einstückigen Materialblock gebildet ist.

13. Vorrichtung nach einem der Ansprüche 1 bis 12, **dadurch gekennzeichnet, dass** diese einstückig aus einem Materialblock gebildet ist.

## Claims

1. Force-transmitting device (1, 101, 201, 301, 401, 501) in a force-measuring cell, with a parallel-guiding mechanism comprising a stationary parallelogram leg (2, 102, 202, 302, 402, 502) and a movably guided parallelogram leg (3) which are connected to each other by parallelogram guides (4, 5), wherein the stationary parallelogram leg (2, 102, 202, 302, 402, 502) and the movably guided parallelogram leg (3) each has an end surface (17, 18, 117, 217, 317, 417, 517), and wherein the stationary parallelogram leg (2, 102, 202, 302, 402, 502) and/or the movably guided parallelogram leg (3) has a part which serves the function of fastening and has at least two fastening portions (20, 30, 120, 220, 320, 420, 520), wherein each of the fastening portions (20, 30, 120, 220, 320, 420, 520) is defined by a fastening surface (23, 24, 123, 223, 323, 423, 523) and by the length of a hole (26) running perpendicular to said fastening surface to fasten a load carrier to the force-transmitting device (1, 101, 201, 301, 401, 501) and/or to fasten the force-transmitting device (1, 101, 201, 301, 401, 501) to a housing or to an intermediate holder, and wherein the respective parallelogram leg (2, 3, 102, 202, 302, 402, 502) has first rectilinear slot-shaped incisions (2, 3, 102, 202, 302, 402, 502) which separate the part that serves for fastening from the rest of the parallelogram leg (2, 3, 102, 202, 302, 402, 502), **characterized in that** the fastening pad surface areas (23, 24, 123, 223, 323, 423, 523) of the fastening portions (20, 30, 120, 220, 320, 420, 520) are raised relative to the respective parallelogram leg surface, that the first slot-shaped incisions (21, 121, 221, 321, 22, 122, 422, 522) cut partway through the parallelogram leg (2, 3, 102, 202, 302, 402, 502) in a plane that runs parallel or at an oblique angle to the end surface (17, 18, 117, 217, 317, 417, 517) and the dimensions of said incisions in said plane, as compared to the width and the height of the end surface (17, 18, 117, 217, 317, 417, 517), are confined to a part of the width and the height of said end surface (17, 18, 117, 217, 317, 417, 517), wherein the size of each slot-shaped incision in the parallelogram leg (2, 3, 102, 202, 302, 402, 502) corresponds in essence to the dimensions of the respective fastening portion (20, 30, 120, 220, 320, 420, 520).

2. Device according to claim 1, **characterized in that** the fastening portions (20, 30, 120, 220, 320, 420, 520) as well as the slot-shaped incisions, either individually or in pairs, are mirror-symmetric relative to a parallelogram plane (360, 460, 560) extending as a center plane through the parallelogram mechanism.

3. Device according to claim 1 or claim 2, **characterized in that** further rectilinear slot-shaped incisions are present, in particular second rectilinear slot-shaped incisions (27, 28, 127, 128, 227, 428, 528) and/or third rectilinear slot-shaped incisions (41, 141, 441).

4. Device according to one of the claims 1 to 3, **characterized in that** a first or second or third slot-shaped incision extends in a plane that runs at an oblique angle or parallel or perpendicular to the fastening pad surface (23, 24, 123, 223, 323, 423, 523).

5. Device according to claim 3 or claim 4, **characterized in that** the second slot-shaped incisions (27, 28, 127, 128, 227, 428, 528) and/or the third slot-shaped incisions (41, 141, 441) are oriented perpendicular to the first slot-shaped incisions (21, 22, 121, 122, 221, 422, 522).

6. Device according to one of the claims 1 to 5, **characterized in that** the fastening portions (20, 30, 320, 420, 520) are arranged laterally in the area of an end surface (17, 18, 317, 417, 517) of a substantially block-shaped stationary parallelogram leg (2, 302, 402, 502) and/or of a movably guided parallelogram leg (3).

7. Device according to one of the claims 1 to 5, **characterized in that** all fastening portions (120) are arranged in the area of a topside or a bottom side of a substantially block-shaped stationary parallelogram leg (102) and/or of a movably guided parallelogram leg.

8. Device according to one of the claims 1 to 5, **characterized in that** the at least two fastening portions (220) are arranged at two opposite sides, in particular a topside and a bottom side, or at the outward sides that are aligned with the parallelogram plane, of a substantially block-shaped stationary parallelogram leg (202) and/or of a movably guided parallelogram leg.

9. Device according to one of the claims 1 to 8, **characterized in that** each fastening pad surface area (23, 123, 223, 323, 423, 523) is configured in a rectangular shape.

10. Device according to one of the claims 1 to 9, **characterized in that** each fastening pad surface area (23, 24, 223, 323, 423, 523) is arranged with point symmetry relative to the center of the hole.

11. Device according to claim 10, **characterized in that** each of the fastening pad surface areas (24) has a circular shape.

12. Device according to one of the claims 1 to 11, **characterized in that** the parallel-guiding mechanism is formed of an integral block of material.

13. Device according to one of the claims 1 to 12, **characterized in that** the device is formed of an integral block of material.

## Revendications

1. Dispositif pour la transmission de force (1, 101, 201, 301, 401, 501) dans une cellule de mesure de force, comprenant un guide parallèle avec une branche de parallélogramme fixe (2, 102, 202, 302, 402, 502) et une branche de parallélogramme (3) pouvant être déviée, qui sont reliées l'une à l'autre par des bras oscillants à parallélogramme (4, 5), la branche de parallélogramme (2, 102, 202, 302, 402, 502) fixe et la branche de parallélogramme (3) pouvant être déviée présentant chacune une face avant (17, 18, 117, 217, 317, 417, 517) et la branche de parallélogramme (2, 102, 202, 302, 402, 502) fixe et/ou la branche de parallélogramme (3) pouvant être déviée présentant une partie servant à la fixation avec au moins deux zones de fixation (20, 30, 120, 220, 320, 420, 520) définies essentiellement par une surface de fixation (23, 24, 123, 223, 323, 423, 523) et la longueur d'un perçage (26) perpendiculaire à la première surface pour la fixation d'un support de charge sur le dispositif de transmission de force (1, 101, 201, 301, 401, 501) et/ou le dispositif de transmission de force (1, 101, 201, 301, 401, 501) sur un boîtier ou un support intermédiaire, des premières entailles (21, 22, 121, 122, 221, 321, 422, 522) en forme de fente, agencées de façon rectiligne étant présentes dans la branche de parallélogramme (2, 3, 102, 202, 302, 402, 502) respective, lesquelles branches séparent la partie servant à la fixation de la branche de parallélogramme restante (2, 3, 102, 202, 302, 402, 502), **caractérisé en ce que** les surfaces de fixation (23, 24, 123, 223, 323, 423, 523) des zones de fixation (20, 30, 120, 220, 320, 420, 520) sont conçues saillantes par rapport à la surface de branche respective et **en ce que** les premières entailles (21, 22, 121, 122, 221, 321, 422, 522) en forme de fente traversent la branche de parallélogramme (2, 3, 102, 202, 302, 402, 502) respective dans un plan parallèlement ou en biais par rapport à la surface avant (17, 18, 117, 217, 317, 417, 517) et sont limitées par rapport à la largeur et à la hauteur de la surface avant (17, 18, 117, 217, 317, 417, 517) dans leur extension de surface à une partie de la largeur et de la hauteur de la surface avant (17, 18, 217, 317, 417, 517), leur extension respective correspondant dans la branche de parallélogramme (2, 3, 102, 202, 302, 402, 502) sensiblement à l'extension de chaque zone de fixation (20, 30, 120, 220, 320, 420, 520).

2. Dispositif selon la revendication 1, **caractérisé en ce que** les zones de fixation (20, 30, 120, 220, 320, 420, 520) et les entailles en forme de fente sont disposées soit individuellement soit par paires de façon symétrique par rapport à un plan de parallélogramme (360, 460, 560) agencé au centre dans le guide parallèle.

3. Dispositif selon la revendication 1 ou 2, **caractérisé en ce que** d'autres entailles en forme de fente, agencées de façon rectiligne, en particulier des secondes entailles (27, 28, 127, 128, 227, 428, 528) en forme de fente et agencées de façon rectiligne et/ou des troisièmes entailles (41, 141, 441) en forme de fente et agencées de façon rectiligne sont présentes.

4. Dispositif selon l'une quelconque des revendications 1 à 3, **caractérisé en ce qu'**une première ou une seconde ou une troisième entaille en forme de fente est agencée dans un plan en biais ou parallèlement ou perpendiculairement à la surface de fixation (23, 24, 123, 223, 323, 423, 523).

5. Dispositif selon la revendication 3 ou 4, **caractérisé en ce que** les secondes entailles (27, 28, 127, 128, 227, 428, 528) en forme de fente et/ou les troisièmes entailles (41, 141, 441) en forme de fente sont orientées perpendiculairement aux premières entailles (21, 22, 121, 122, 221, 422, 522) en forme de fente.

6. Dispositif selon l'une quelconque des revendications 1 à 5, **caractérisé en ce que** les zones de fixation (20, 30, 320, 420, 520) sont positionnées sur le côté, dans la zone d'une surface avant (17, 18, 317, 417, 517) respective d'une branche de parallélogramme (2, 302, 402, 502) fixe et réalisée de façon sensiblement carrée et/ou d'une branche de parallélogramme (3) pouvant être déviée.

7. Dispositif selon l'une quelconque des revendications 1 à 5, **caractérisé en ce que** toutes les zones de fixation (120) sont positionnées dans la zone d'un côté supérieur ou d'un côté inférieur d'une branche de parallélogramme (102) fixe réalisée de façon sensiblement carrée et/ou d'une branche de parallélogramme pouvant être déviée.

8. Dispositif selon l'une quelconque des revendications 1 à 5, **caractérisé en ce que** les au moins deux zones de fixation (220) sont divisées, sont positionnées sur deux côtés opposés, en particulier sur le côté supérieur et le côté inférieur respectivement sur les côtés extérieurs situés dans le plan du parallélogramme, d'une branche de parallélogramme (202) fixe réalisée sensiblement de façon carrée et/ou d'une branche de parallélogramme pouvant être déviée.

9. Dispositif selon l'une quelconque des revendications 1 à 8, **caractérisé en ce que** chaque surface de fixation (23, 123, 223, 323, 423, 523) est conçue rectangulaire.

10. Dispositif selon l'une quelconque des revendications 1 à 9, **caractérisé en ce que** chaque surface de fixation (23, 24, 223, 323, 423, 523) est disposée de façon symétrique par rapport au centre du perçage.

11. Dispositif selon la revendication 10, **caractérisé en ce que** chaque surface de fixation (24) a une forme circulaire.

12. Dispositif selon l'une quelconque des revendications 1 à 11, **caractérisé en ce que** le guide parallèle est conçu dans un bloc de matériau d'une seule pièce.

13. Dispositif selon l'une quelconque des revendications 1 à 12, **caractérisé en ce que** ce dispositif est formé d'une seule pièce dans un bloc de matériau.
